Europäisches Patentamt

European Patent Office

Office européen des brevets

(11) Publication number: 0 399 811 A2

## (12) EUROPEAN PATENT APPLICATION

(21) Application number: 90305630.7

(22) Date of filing: 23.05.90

(51) Int. Cl.5: B60S 1/24

(30) Priority: 26.05.89 JP 61443/89 U

(43) Date of publication of application:
28.11.90 Bulletin 90/48

(84) Designated Contracting States:
DE FR GB

(71) Applicant: JIDOSHA DENKI KOGYO
KABUSHIKI KAISHA
1760, Higashimatano-cho Totsuka-ku
Yokohama-city, Kanagawa-prefecture(JP)

(72) Inventor: Isii, Yoshinori, c/o Jidosha Denki
Kogyo K. K.
No. 1760 Higashimatano-cho, Totsuka-ku
Yokohama-city, Kanagawa-prefecture(JP)

(74) Representative: Driver, Virginia Rozanne et al
Page White & Farrer 54 Doughty Street
London WC1N 2LS(GB)

(54) Wiper device.

(57) A wiper device (1) comprises a wiper arm (2) a pivot shaft (4), a lever (8), a connecting pin (5) and an eccentric bearing mechanism (9) provided with an eccentric bearing (9a) to the lever (8) and for rotating the bearing (9a) around the axis (50) of said connecting pin (5) and narrowing the wiping area on the wiped surface (52) when the torque applied on said bearing (9a) is larger than predetermined value. According to the device, it is possible to reduce the parts of the mechanism for varying the wiping area in number, and possible to make the wiping device compact.

FIG.1

# WIPER DEVICE

This invention relates to a wiper device used for wiping extraneous matters such as rain drops, dust and so on off from a windshield glass of, for example, an automobile having a predetermined wiping area, in particular to a wiper device which is capable to vary said wiping area.

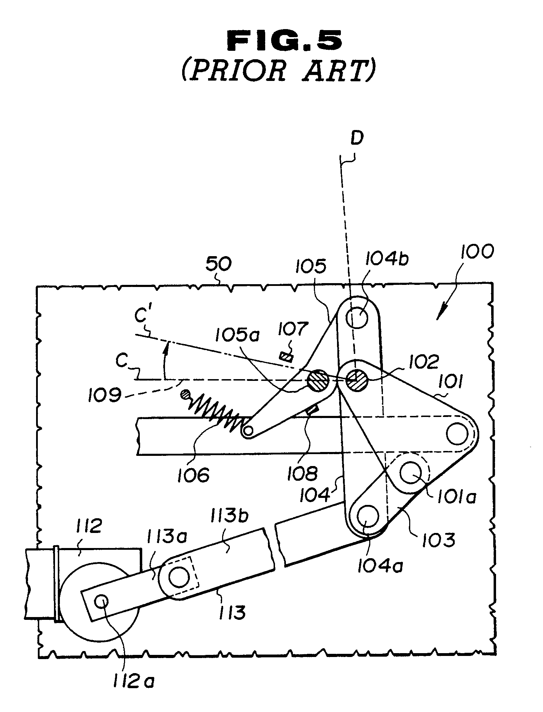

Heretofore, there has been a wiper device of aforementioned type disclosed in Japanese Patent Public Disclosure (Kokai) No. 63-10053/88, which is shown in Figure 5.

In a wiper device 100 shown in the figure, a first lever 101 is provided with a pivot shaft 102 attached rotatably to a vehicle body 50 to one end thereof, another end of said first lever 101 is connected to one end of an intermediate link 103 at a connecting part 101a, and another end of said intermediate link 103 is connected to one end of a second lever 104 at a connecting part 104a.

Another end of the second lever 104 is connected to one end of a changing lever 105 attached rotatably to the vehicle body 50 through a shaft 105a at a connecting part 104b, said changing lever 105 is energized by a spring 106 and so designed as to move rotatively between stoppers 107 and 108.

And the pivot shaft 102 is provided with a wiper arm 109, said wiper arm 109 is attached with a wiper blade (not shown).

Furthermore, said connecting part 104a connecting one end of the second lever 104 with another end of the intermediate link 103 is connected to a wiper linkage 113 connected to an output shaft 112a of a wiper motor 112.

Hereupon, supplying electric power to the wiper motor 112 at a state of contacting the changing lever 105 with the stopper 107, a motor arm 113a of the wiper linkage 113 rotates by the rotation of the output shaft 112a of the wiper motor 112 and the rotational power is transmitted to another end of the first lever 101 through the connecting part 104a connecting another end of the intermediate link 103 with one end of the second lever 104 from a link connecting rod 113b of the wiper linkage 113.

Thereby, the pivot shaft 102 is rotated reciprocatively by the reciprocative movement of the first lever 101 and the wiper arm 109 moves swingingly between the lower turning position C and upper turning position D, so that the wiper blade (not shown) wipes a wiped surface of a windshield glass.

Supplying electric power to the wiper motor 112 at a state in which the changing lever 105 is in contact with another stopper 108 by holding the changing lever 105 from the stopper 107, the first lever 101, the intermediate link 103 and the second lever 104 perform a double-lever action using the shaft 105a and the pivot shaft 102 as a fixed link because the changing lever 105 is in contact with another stopper 108, although the rotational power of the output shaft 112a of the wiper motor 112 is transmitted to the first lever 101 in the same manner as described above.

Accordingly, the wiper arm 109 moves swingingly between a lower turning position C' higher than said lower turning position C and the upper turning position D and the wiper blade (not shown) wipes a narrowed wiped surface of the windshield glass.

However, in the conventional wiper device 100 described above, the wiping area is varied by the first lever 101, the intermediate lever 103, the second lever 104 and the changing lever 105, therefore there is a problem since the parts of the wiper device 100 increase in number. And the actuation zone of the respective parts becomes larger when the first lever 101, the intermediate link 103 and the second lever 104 perform the double-lever mechanism action using the shaft 105a and the pivot shaft 102 as the fixed link, accordingly there is another problem since the scaling up of the whole body of the device is not avoidable. It has been hoped to solve said problems.

Therefore, this invention is made in view of the aforementioned problems of the prior art and an object of the invention is to provide a wiper device which has a compact construction and is possible to vary the wiping area.

The present invention therefore provides a wiper arm provided with a wiper blade to be pressed on a wiped surface, a pivot shaft connected to said wiper arm, a lever fixed to said pivot shaft, a connecting pin that connects said lever and an output shaft of a wiper motor through a wiper linkage, and an eccentric bearing mechanism provided with an eccentric bearing of which axis is deviated from an axis of said connecting pin fixed to said lever and which is connected rotatably with said wiper linkage for rotating said bearing around the axis of said connecting pin when torque applied on said bearing is larger than predetermined value.

The wiper device according to a preferred embodiment of the this invention is so constructed by the eccentric bearing mechanism as to rotate the bearing of which axis is shifted from the axis of the connecting pin round the axis of the connecting pin when torque applied on said bearing is larger than predetermined value, for example, when snow accumulates at the lower turning position of the wiper arm, or someone retains the movement of the wiper blade or the wiper arm, and as to connect the wiper linkage rotatably to said bearing. Accordingly, the parts required to vary the wiping area on the wiped surface is reduced in number, and the actuation zone of the respective parts does not become large.

For a better understanding of the present invention and to show how the same may be carried into effect, reference will now be made, by way of example only, to the accompanying drawings in which:

Figure 1 is a partially broken view illustrating the wiper device according to an embodiment of this invention ;

Figure 2 is a plan view illustrating the neighborhood of the eccentric bearing mechanism of the wiper device shown in Figure 1 ;

Figure 3 is a sectional side view illustrating the eccentric bearing mechanism shown in Figure 2 ;

Figure 4 is a sectional side view illustrating the bearing of the eccentric- bearing mechanism shown in Figure 2 ; and

Figure 5 is a schematic illustiration of the conventional wiper device.

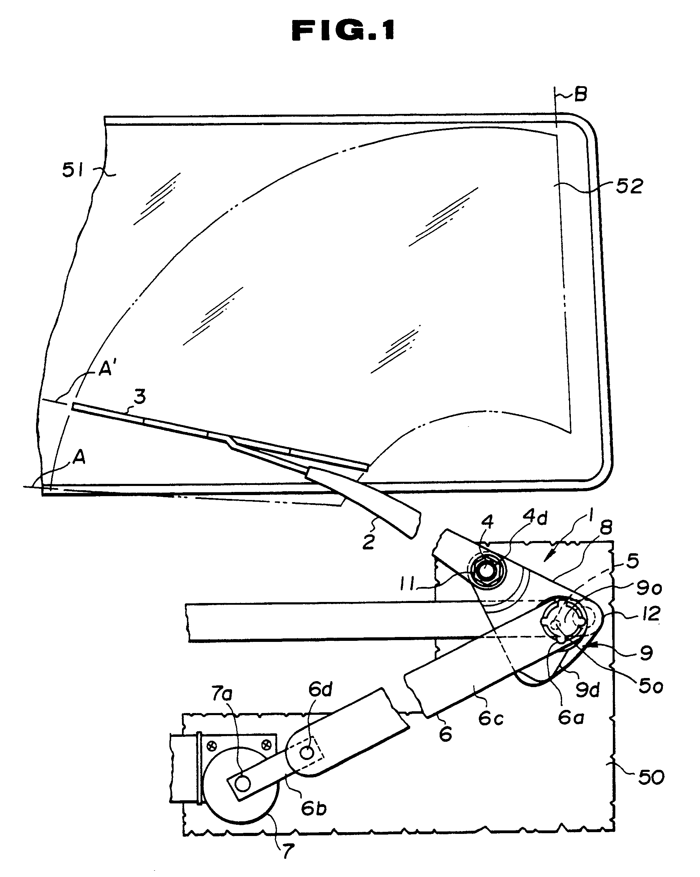

An embodiment of the wiper device according to this invention will be described on basis of Figure 1 to Figure 4.

A wiper device 1 shown in the figures is attached with a wiper blade 3 to be pressed on a wiped surface 52 of a windshield glass 51 to one end of a wiper arm 2, and another end of said wiper arm 2 is connected to a pivot shaft 4.

Said pivot shaft 4 is attached to a lever 8 and the lever 8 is connected to an output shaft 7a of a wiper motor 7 through a wiper linkage 6 by connecting pin 5.

And said lever 8 is provided with a bearing 9a having an axis 9o shifted from an axis 5o of said connecting pin 5, said wiper linkage 6 is connected rotatably to said bearing 9a and an eccentric bearing mechanism 9 is provided for moving said bearing 9a rotatively round the axis So of said connecting pin 5 when torque applied on said bearing 9a is larger than predetermined value.

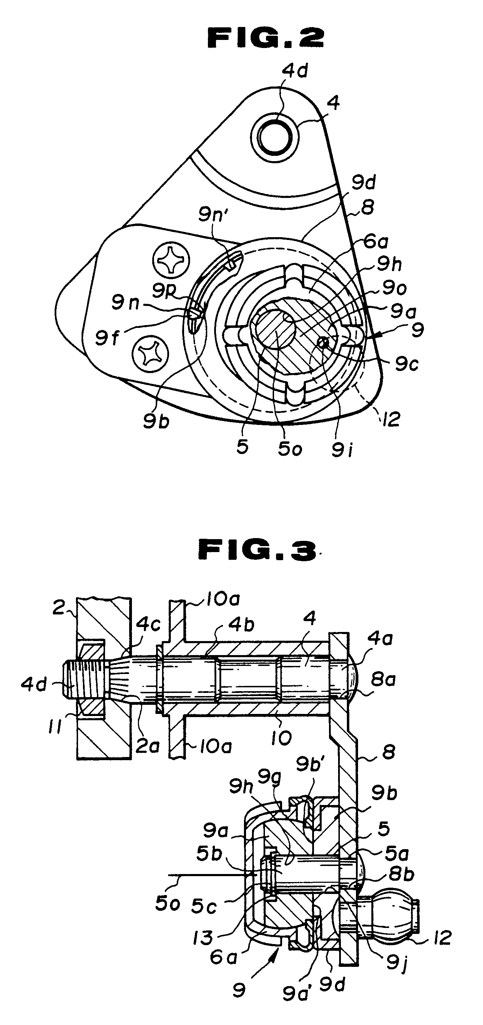

The pivot shaft 4 is fixed by fixing means such as plasma welding or the like after inserting an end 4a on the right side in Figure 3 into a pivot-fixing hole 8a provided to the upper end of the lever 8 in Figure 3, and a axle part 4b positioned in the center of Figure 3 is supported in rotatable state by a holder 10 having an attaching part 10a to be attached to a vehicle body 50.

And the pivot shaft 4 is connected with the wiper arm 2 by screwing a nut 11 into a male screw part 4d provided to the left end of the pivot shaft 4 in Figure 3 in the state of fitting a tapered part 4c provided to the position near to the left end of said pivot shaft 4 in Figure 3 into a receiving part 2a provided to another end of the wiper arm 2.

On the one side, the lever 8 is a fan-like shaped plate flared downwardly in Figure 2 from the pivot-fixing hole 8a provided to the upper end thereof in Figure 3, is peovided with a connecting pin fixing hole 8b for fixing the connecting pin 5 (will be described later) in a position near to the lower end thereof in Figure 3 and is fixed with a ball pin 12 to be connected with other wiper arm having a spherical end on the lower side of said connecting pin fixing hole 8b.

On the other side, the connecting pin 5 is fixed by fixing means such as silver soldering or the like after inserting an end 5a on the right side in Figure 3 into the connecting pin fixing hole 8b provided to the lever 8, and provided with a groove 5c cut in the circumferencial direction on the left end of an axle part 5b in Figure 3 for fitting a C-ring 13.

Additionally, the eccentric bearing mechanism 9 is provided with a bearing 9a having a barrel led external form, a cam 9b, a lock pin 9c for imcorporating said bearing 9a with the cam 9b, a holder 9d for holding said cam 9b on the lever 8 in rotatable state and a slider 9f for restraining said cam 9b by a compression spring 9e.

The bearing 9a is provided with a spherical part 9g for connecting with a ball retainer 6a equipped to the wiper linkage 6 (will be described later) through a spherical pair on the outer periphery, and with a through hole 9h for passing said connecting pin 5 at a position shifed from the axis 9o thereof.

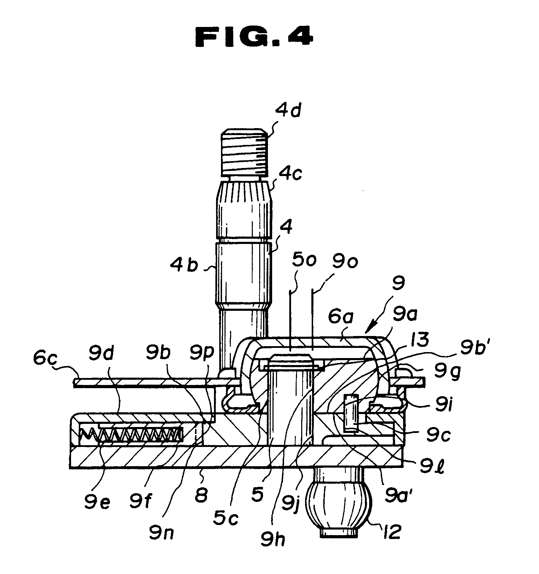

And said bearing 9a is provided with a lock pin hole 9i for receiving the lock pin 9c on the lower surface 9a' thereof as shown in Figure 4.

Said cam 9b is provided with a through hole 9j for passing said connecting pin 5 in the center thereof and with a lock pin hole 9l for receiving the lock pin 9c on the upper surface 9b' as shown in Figure 4.

Hereupon, the connecting pin 5 is passed through the through hole 9j provided to the cam 9b ahd the through hole 9h provided to the bearing 9a at a state in which the lock pin 9c is fitted into the lock pin hole 9i provided to the bearing 9a and the lock pin hole 9l provided to the cam 9b respectively, and the C-ring 13 is fitted into the groove 5c provided to the connecting pin 5 at the part which sticks out from the bearing 9a.

And a projection 9p of the slider 9f is engaged with a notch 9n or 9n' provided to the outer periphery of the cam 9b by the elastic repulsion of the compression spring 9e and the cam 9b is restrained by the slider 9f.

Thereby, as shown in Figure 2, the bearing 9a is incorporated with the cam 9b and the rotation of the cam 9b is restrained by the slider 9f, and because the notch 9n of the cam 9b is disengaged from the projection 9p of the slider 9f when torque larger than predetermined value, that is, when the force caused by the accumlation of snow, or the force caused at the time someone rest rains the movement of the wiper blade or the wiper arm acts on the bearing 9a in this state, the cam 9b moves rotatively round the axis So of the connecting pin 5 and the slider 9f is so structured as to engage into another notch 9n' of the cam 9b. Accordingly, as the effective length of the lever 8 changes, the bearing 9a moves oscillatively round the pivot shaft 4 in one united body with the cam 9b and the wiper blade 3 is so disigned as to wipe the wiping area between a turning position A' higher than lower turning position A and an upper turning position B of the wiped surface 52 in Figure 1.

And a motor arm 6b of the wiper linkage 6 is fixed to the output shaft 7a of the wiper linkage 6 is connected rotatably to said motor arm 6b at a connecting part 6d and the link connecting rod 6c us connected to the bearing 9a of the eccentric bearing nechanism 9 by a ball retainer 6a attached to anotoer end thereof.

Supplying electric power to the wiper motor 7, the motor arm 6b of the wiper linkage 6 rotates according to the roration of the output shaft 7a of the wiper motor 7, the rotational power is transmitted to the bearing 9a of the eccentric bearing mechanism 9 from the link connecting rod 6c of the wiper linkage 6, and the rotation of said output shaft 7a is converted into the swinging movement of the lever 8 round the pivot shaft 4.

Thereby, the wiper arm 2 connected to the pivot shaft 4 moves swingingly over the wiped surface 52 of the windshield glass 51, the wiper blade 3 attached to the wiper arm 2 is made to move reciprocatively between the lower turning position A and the upper turning position B on the wiped surface 52 at the same time of pressing it slidingly on the wiped surface 52 by a pressing spring (not shown), and extraneus mattars on the wiped surface 52 are wiped off by said wiper blade 3.

And, moving the wiper blade 3 or the wiper arm 2 by hand to the turning position A shifted to the upper turning position B in the clockwise direction in Figure 1 when the wiper motor 7 stops and the wiper blade 3 is in the lower turning position A, the lever 8 moves rotatably in the clockwise direction round the pivot shaft 4 since the link connecting rod 6c and the motor arm 6b fixed to the output shaft 7a of the wiper motor 7 are locked with each other. Therefore, the bearing 9a of the eccentric bearing mechanism 9 receives large torque, the notch 9n of the cam 9b is disengaged from the projection 9p of the slider 9f and the bearing 9a is rotated eccentrically round the axis 5o of the connecting pin 5, consequently said projection 9p of the slider 9f is engaged into the notch 9n' of the cam 9b.

Thereby, the connecting position of the ball retainer 6a connected with the bearing 9a of the eccentric bearing mechanism 9, that is, the axis 90 of the bearing 9a is displaced to the position near to the wiper motor 7 on the lever 8.

In this state, supplying electric power to the wiper motor 7, the rotation of the output shaft 7a of the wiper motor 7 is converted into the reciprocative rotation of the lever 8 in the same manner as described above, however the area of reciprocative rotation of the lever 8 becomes narrower because the axis 9o of the bearing 9a of the eccentric bearing mechanism 9 is displaced to the position near to the wiper motor 7. Accordingly, the wiper blade 3 moves swingingly between said turning position A' higher than the lower turning position A and the upper turning position B.

As mentioned above, the wiper device according to this invention has the eccentric bearing mechanism provided with the eccentric bearing of which axis is deviated from the axis of the connecting pin fixed to the lever and which is connected rotatably with the wiper linkage for rotating said bearing around the axis of said connecting pin when torque applied on said bearing is larger than predetermined value. Therefore, it is possible to reduce the number of the parts of the mechanism for varying the wiping area on the wiped surface by the increase of the wiper load according to the accumlation of snow at the lower turning position or the restraint of the movement of the wiper blade or the wiper arm by a person's will. And the actuation zone of the respective parts becomes small because it is possible to vary the wiping area by only the eccentric bearing mechanism provided to the lever. Accordingly, an excellent effect can be obtained since the wiper device can be made in compact.

## Claims

1. A wiper device comprising :
a wiper arm provided with a wiper blade to be pressed on a wiped surface ;
a pivot shaft connected to said wiper arm ;
a lever fixed to said pivot shaft ;
a connecting pin that connects said lever and output shaft of a wiper motor through a wiper linkage ; and
an eccentric bearing mechanism provided with an eccentric bearing of which axis is deviated from an axis of said connecting pin fixed to said lever and which is connected rotatably with said wiper linkage for rotating said bearing around the axis of said connecting pin when torque applied on said bearing is larger than predetermined value.

2. A wiper device as set forth in claim 1, wherein said eccentric bearing mechanism has a cam provided with a plurality of notches on the outer periphery and supported by the connecting pin at the center thereof, and a slider provided with a projection for engaging to one of said notches of the cam in addition to said eccentric bearing.

3. A wiper device as set forth in claim 2, wherein said eccentric bearing is provided with a spherical periphery.

4. A wiper device as set forth in claim 2, wherein said slider shifts from a notch to another notch of the cam for varying a wiping area on the wiped surface.

5. A wiper device as set forth in claim 2, wherein said slider is in contact with the cam always by a spring.

6. A wiper device as set forth in claim 2, wherein said eccentric bearing mechanism is provided on the lever fixed to the pivot shaft.

7. A wiper device as set forth in claim 2, wherein said cam is single.

# FIG.1

# FIG.2

# FIG.3

EP 0 399 811 A2

# FIG. 4

# FIG.5
## (PRIOR ART)